**Europäisches Patentamt**

**European Patent Office**

**Office européen des brevets**

(11) Veröffentlichungsnummer: **0 362 605 B1**

(12) **EUROPÄISCHE PATENTSCHRIFT**

(45) Veröffentlichungstag der Patentschrift: **16.12.92**

(21) Anmeldenummer: **89117179.5**

(22) Anmeldetag: **16.09.89**

(51) Int. Cl.⁵: **C01B 31/30**, C01B 21/06

(54) Verfahren zur Herstellung feinteiliger Carbide und Nitride aus keramischen Vorläuferverbindungen.

(30) Priorität: **01.10.88 DE 3833382**

(43) Veröffentlichungstag der Anmeldung:
**11.04.90 Patentblatt 90/15**

(45) Bekanntmachung des Hinweises auf die
Patenterteilung:
**16.12.92 Patentblatt 92/51**

(84) Benannte Vertragsstaaten:
**CH DE FR GB IT LI SE**

(56) Entgegenhaltungen:
**EP-A- 0 239 301**
**EP-A- 0 284 235**
**US-A- 4 740 574**

(73) Patentinhaber: **BAYER AG**

**W-5090 Leverkusen 1 Bayerwerk(DE)**

(72) Erfinder: **Krumbe, Wolfgang, Dr.**
**Breslauer Strasse 31**
**W-4150 Krefeld(DE)**
Erfinder: **Laubach, Benno, Dr.**
**Bodelschwinghstrasse 22**
**W-4150 Krefeld(DE)**
Erfinder: **Franz, Gerhard, Dr.**
**Erich-Klausener-Strasse 44**
**W-4150 Krefeld 1(DE)**

**Beschreibung**

Die vorliegende Erfindung betrifft ein Verfahren zur Herstellung feinteiliger Carbide und/oder Nitride und/oder Carbonitride von Metallen und/oder Metalloiden der Elemente der III. und IV. Hauptgruppe sowie der III., IV., V. und VI. Nebengruppe des periodischen Systems der Elemente aus Verbindungen der Formel $MX_m$ und/oder $R_nMX_{m-n}$, wobei X ein Halogen ist und R Wasserstoff, Alkyl oder Aryl ist und n ganzzahlige Werte zwischen eins und der um eins verringerten maximalen Wertigkeitsstufe m des Elements M annehmen kann, durch Umsetzung mit einer reaktiven kohlenwasserstoffhaltigen Verbindung und/oder einem reaktiven Gemisch kohlenwasserstoff-haltiger Verbindungen und thermischer Zersetzung des so erhaltenen Produktes zu den entsprechenden Carbiden oder zu den entsprechenden Nitriden und/oder zu den entsprechenden Carbonitriden bei gleichzeitiger Nitridierung.

Bei der Herstellung von Carbiden, Nitriden und Carbonitriden von Metallen oder Metalloiden werden zur Erzielung feinteiliger hochqualitativer Produkte die Edukte in homogener Verteilung zur Reaktion gebracht.

Bei einigen carbothermischen Verfahren wird die homogene Verteilung dadurch erreicht, daß von Gemischen der entsprechenden Oxide und organischen Kohlenwasserstoffverbindungen (meist als Flüssigkeit) ausgegangen wird, die bei der thermischen Zersetzung einen hohen Kohlenstoffrückstand aufweisen und somit als feinteilige Kohlenstoffquelle für die Reduktion der Metall- und Nichtmetalloxide zur Verfügung stehen.

Eine zusätzliche Verbesserung wird erreicht, wenn man auch die oxidische Verbindung in extrem feinteiliger Form einsetzt. So wird gemäß Ceramic Bulletin Vol. 63, No. 8 (1984) mit der Verwendung von kolloidalem $SiO_2$ oder von Methyltrimethoxysilan eine feinteilige bzw. flüssige Metall- oder Nichtmetallkomponente eingesetzt. Die Herstellung von kolloidalem $SiO_2$ wird jedoch durch einen teuren und aufwendigen Flammhydrolyse-Prozeß bzw. das Alkoholat über einen Alkoholyse-Prozeß dargestellt, die dieses Verfahren unwirtschaftlich machen. Weiterhin ist es nachteilig, daß neben einer organischen Kohlenwasserstoffverbindung als Lösungs- bzw. Geliermittel Wasser benutzt, das dem Gel in einem langwierigen Gefriertrocknungsschritt bei -50°C entzogen wird.

Die Gele werden anschließend zwischen 500 und 800°C in $SiO_2$ und C überführt und bei einer Temperatur von 1600°C in einer Zeit von 4 bis 16 Stunden zu SiC umgesetzt. Die so erhaltenen Produkte sind jedoch trotz dieses aufwendigen Prozesses mit nicht reagiertem $SiO_2$ verunreinigt.

Gemäß der US-A 3085863 wird bei der Darstellung des SiC-Pulvers anstelle des Alkoxids oder kolloidalen $SiO_2$ von $SiCl_4$ ausgegangen. Jedoch muß wegen der verwendeten wässrigen Zuckerlösung als Kohlenstoffquelle zur Entwässerung des Silicagels ein zeitaufwendiger Destillationsprozeß (24 Stunden, 200 bis 300°C) angeschlossen werden, bevor die Umsetzung zu SiC bei 1800°C durchgeführt werden kann. Aufgrund der an sich heftigen Hydrolysereaktion kann die Einleitung von $SiCl_4$ nur extrem langsam durchgeführt werden. Außerdem ist mit Verstopfungen im Einleitungsbereich zu rechnen, was die Prozeßführung erschwert.

Gemäß Advanced Ceramic Materials 2 (3A) (1987) 253-56 werden bei der Herstellung von $Si_3N_4$ und AlN ebenfalls Alkoxide eingesetzt, die in einem Hydrolyseprozeß als Gel auf Flammruße aufgefällt werden. Außer den hier verwendeten kostenintensiven Ausgangssubstanzen stellt der prozeßbedingte Entwässerungsschritt bei Niederdruck eine ökonomische Anwendung des Verfahrens im technischen Maßstab in Frage.

Die bei 1500°C hergestellten Pulver weisen außerdem mit 2 % O für $Si_3N_4$ und 3,1 % O für AlN unakzeptabel hohe Sauerstoffgehalte auf.

Ein Verfahren zur Darstellung von Bornitrid und Borcarbid durch Pyrolyse eines polymeren Esters aus Borsäure und Glycerin wird in Chemistry Letters (1985) 691-692 beschrieben. Der Nachteil bei den aus diesen Organoboratestern hergestellten borhaltigen Keramikpulvern ist die schlechte Umsetzung zum Endprodukt. Das erhaltene Bornitrid ist stark mit Borcarbid verunreinigt.

Die Patentanmeldungen EP-A 0 284 23, und EP-A 0 239 301 beschreiben ebenfalls ein Verfahren zur Darstellung von Nitriden und Carbiden durch thermische Zersetzung (bis 1800°C) von Estern mehrwertiger Alkohole.

Zur Veresterung wird im Gegensatz zu dem oben beschriebenen Verfahren nicht von den Oxiden sondern, wie in allen Patentbeispielen aufgeführt, von den kostenintensiven Metall- oder Nichtmetallalkoxiden ausgegangen.

Als Alkoholkomponente wird eine Verbindung mit mindestens zwei oder bevorzugt mehr Hydroxylgruppen benötigt, über die die eigentliche Vernetzung zu einem Polymer abläuft.

Die mehrwertigen Alkohole Ethylenglykol und Glycerin verestern mit den Metall- oder Nichtmetallalkoxiden unter Abspaltung von Alkohol. Dieser muß zur Verschiebung des Gleichgewichts zur Produktseite in einem langwierigen Verfahrensschritt abdestilliert werden,

Zur Erhöhung des Kohlenstoffgehaltes wird wahlweise eine geringe Menge einer organischen Verbindung, wie z.B. Furfurylalkohol, zugesetzt.

Somit ist eine Wirtschaftlichkeit des Verfahrens wegen der teuren Rohstoffe (Alkoholate) und der aufwendigen Verfahrensschritte nicht gegeben.

Das Ziel der Erfindung ist es, ein Verfahren zur Herstellung von Nitriden, Carbiden und Carbonitriden zur Verfügung zu stellen, bei dem von kostengünstigen, hochreinen Ausgangschemikalien ausgegangen werden kann, ohne daß es die Nachteile der beschriebenen Verfahren aufweist. Die Ausgangssubstanzen sollten sich dabei ohne aufwendige Prozeßschritte, wie sie oben beschrieben werden, in die Carbide, Nitride und Carbonitride überführen lassen.

Überraschenderweise wurde nun ein Prozeß gefunden, der diese Anforderungen erfüllt, bei dem man direkt von den kostengünstigen Halogeniden ausgehen kann, ohne sie in einem aufwendigen Schritt verestern oder hydrolysieren zu müssen.

In einer spontanen, bisher nicht aufgeklärten Reaktion, reagiert dabei das Metall- oder Metalloidhalogenid mit einer C-OH-funktionalen polymerisierbaren Verbindung oder einem solchen Verbindungsgemisch unter Polymerisation zu einem keramischen M-O-C-haltigen Vorprodukt, das durch einfache thermische Behandlung in die gewünschte hochreine feuerfeste Metall- oder Metalloidverbindung umgesetzt werden kann.

Gegenstand dieser Erfindung ist somit ein Verfahren zur Herstellung feinteiliger Carbide und/oder Nitride und/oder Carbonitride von Metallen und/oder Metalloiden der Elemente der III. und IV. Hauptgruppe sowie der III., IV., V. und VI. Nebengruppe des periodischen Systems der Elemente aus Verbindungen der Formeln $MX_m$ und/oder $R_nMX_{m-n}$, wobei X ein Halogen ist und R Wasserstoff, Alkyl oder Aryl und n ganzzahlige Werte zwischen eins und der um eins verringerten maximalen Wertigkeitsstufe m des Elements M annehmen kann, durch Umsetzung mit einer reaktiven kohlenwasserstoffhaltigen Verbindung und/oder einem reaktiven Gemisch kohlenwasserstoffhaltiger Verbindungen und thermischer Zersetzung des so erhaltenen Produktes zu den entsprechenden Carbiden, oder zu den entsprechenden Nitriden und/oder zu entsprechenden Carbonitriden bei gleichzeitiger Nitridierung, dadurch gekennzeichnet, daß die reaktive, kohlenwasserstoffhaltige Verbindung polymerisierbar ist und eine C-OH-Gruppe enthalt und/oder das Gemisch von kohlenwasserstoffhaltigen Verbindungen polymerisierbar ist und eine reaktive, C-OH-Gruppe enthaltende Verbindung beinhaltet.

Beim erfindungsgemäßen Verfahren wird ein polymeres Produkt erzeugt, das je nach der eingesetzten Metall- oder Metalloidverbindung als schwarzes Pulver oder als schwarzer spröder Feststoff anfällt. Unter geeigneter Prozeßführung wird eine molekulardisperse Verteilung der Verbindungen im keramischen Vorprodukt erzielt. In der anschließenden thermischen Zersetzung läßt sich ein feinteiliges Keramik-Pulver mit hoher spezifischer Oberfläche herstellen. Die Anwendung von Stickstoff als Gasatmosphäre während der Temperung und die Einhaltung einer definierten Grenztemperatur für das jeweilige Element führt zur Nitridbildung und bei entsprechend höheren Temperaturen oder Einsatz eines inerten Schutzgases oder Gasen wid Wasserstoff und CO können die Carbide dargestellt werden. Ist die Bildung von Carbid/Nitrid-Mischphasen oder Carbonitriden angestrebt, so lassen sich diese durch Variation von Temperatur und Atmosphärenzusammensetzung bequem darstellen.

Das erfindungsgemäße Verfahren führt zu einer molekulardispersen Verteilung der oben genannten Verbindungen im Vorprodukt, so daß bei der Kalzination im Vergleich zu den carbothermischen Prozessen, die von Oxid/Kohlenstoff-Mischungen ausgehen, nur ein geringer Kohlenstoffüberschuß notwendig ist. Der eventuell verbleibende nicht reagierte Kohlenstoff kann in einem weiteren Verfahrensschritt abgereichert werden.

Als reaktives Gemisch von kohlenwasserstoffhaltigen Verbindungen dienen z.B. Phenol oder Phenolderivate mit Formaldehyd. Die Polymerisation läuft in diesem Beispiel als säurekatalysierte Polykondensationsreaktion ab.

Eine andere kohlenwasserstoffhaltige Verbindung, die Verwendung findet, ist ein polykondensierbarer einwertiger Alkohol, oder dessen einwertige Derivate, bevorzugt Furfurylalkohol oder dessen Derivate. Furfurylalkohol reagiert bei Zudosieren von Säure spontan unter Polykondensation oder je nach Menge oder Säurestärke unter heftiger Zersetzung mit Rauchentwicklung.

Um die Menge der eingesetzten Kohlenwasserstoffverbindung gering zu halten bietet ers sich an, aromatische Verbindungen wie die oben genannten oder deren Mischungen einzusetzen, da diese oft nach der Polymerisation bei der anschließenden thermischen Zersetzung einen hohen Verkokungsrückstand aufweisen. Die meisten anderen Kohlenwasserstoffverbindungen weisen nach der Pyrolyse einen nur geringen Verkokungsrückstand auf.

Als Metall- und/oder Metalloid werden bevorzugt Ti, Hf, Zr, V, Nb, Ta, Cr, Mo und/oder W sowie das Hauptgruppenelement B, Al und/oder Si als Verbindung der Formel $MX_m$ eingesetzt, mit X als Halogenion wie z.B. Chlorid oder Bromid, liegen Verbindungen vor, die sich leicht hochrein darstellen lassen.

Zur herstellung der Carbide, Nitride und Carbonitride werden aus wirtschaftlichen Gründen bevorzugt die Chloride wie z.B. $TiCl_4$, $ZrCl_4$, $BCl_3$, $AlCl_3$ oder $SiCl_4$ verwendet.

Als Metall-Organylverbindung wird bevorzugt eine Verbindung oder ein Gemisch von Verbindungen der Formel $R_nMX_{m-n}$ eingesetzt, in der R Wasserstoff und/oder eine Alkyl und/oder Arylgruppe bedeutet, wobei n ganzzahlige Werte zwischen 1 und der um eins verringerten Wertigkeitsstufe m des Elements M annehmen kann. Vorzugsweise ist R neben Wasserstoff ein gleicher oder verschiedener $C_1$- bis $C_6$-Rest, insbesondere eine Methyl- oder Phenylgruppe. Sie können leicht über destillative Verfahren auf hohe Reinheiten gebracht werden. Prinzipiell können auch Gemische aus Verbindungen der Formel $R_nMX_{m-n}$ untereinander oder gegebenenfalls auch mit Verbindungen der Formel $MX_m$ zum Einsatz kommen. Einen positiven Einfluß auf die Produktqualität oder auf die Verfahrensdurchführung ist aber nicht zu beobachten, so daß ein solches Vorgehen nur sinnvoll ist, wenn die Gemische bei der Synthese anfallen und so die Kosten der destillativen Trennung eingespart werden können.

Als funktionelle Gruppe X der Verbindung $R_nMX_{m-n}$ wird wegen seiner Wohlfeilheit die Chloridfunktion bevorzugt vie z.B. in den Verbindungen $CH_3SiCl_3$, $(CH_3)_2SiCl_2$, $(CH_3)_2HSiCl$ und $CH_3HSiCl_2$. Ein weiterer Vorteil bei Verwendung der Halogenide liegt darin, daß sie als starke Lewis-Säuren aufgrund ihrer katalytischen Wirkung eine spontane Polymerisation bei vielen der reaktiven Gemische hervorrufen. Handelt es sich bei der Metall- oder Metalloidverbindung um keine starke Lewis-Säure oder läßt sich die reaktive organische Verbindung nicht säurekatalysiert polymerisieren, so wird erfindungsgemäß die Umsetzung der Verbindungen zu einem polymeren Produkt durch Säurezugabe in katalytischer Menge oder durch Zugabe eines anderen Polymerisationskatalysators zu den Verbindungen hervorgerufen.

Die Umsetzung der Verbindungen zu dem gewünschten polymeren Produkt erfolgt vorteilhaft in einem Lösungsmittel, wodurch die Prozeßführung vereinfacht wird. Zwar kann die Reaktion auch prinzipiell ohne Lösungsmittel durchgeführt werden, hierbei können jedoch Schwierigkeiten bei der Herstellung einer homogenen Mischung der Ausgangskomponenten oder Probleme bei der Abführung der Prozeßwärme auftreten. Lösungsmittel wie z.B. Toluol, Aceton oder Methylenchlorid ermöglichen neben einer einfachen homogenen Vermischung der Reaktionspartner durch Rühren das einfache Abführen der Prozeßwärme über das verdampfende Lösungsmittel.

Die Geschwindigkeit der Umsetzung hängt von der Konzentration der Ausgangsverbindungen, deren Reaktivität und der Temperatur ab. Beim Einsatz von z.B. $AlCl_3$, Furfurylalkohol und Methylenchlorid als Lösungsmittel ist die Umsetzung einschließlich der Polykondensation unmittelbar nach dem Mischen bei Raumtemperatur unabhängig vom Verdünnungsmittel beendet.

Der Vorteil des erfindungsgemäßen Verfahrens, im Gegensatz zu dem oben beschriebenen Standes der Technik, ist unter anderem darin zu sehen, daß die Darstellung eines hochmolekularen Vorproduktes nicht durch eine langwierige Veresterungsreaktion eines polyfunktionalen Alkohols wie z.B. Glycerin mit einer Säure oder einem Säurederivat wie z.B. Tetraethoxysilan oder einem Säureanhydrid wie z.B. $B_2O_3$ mit den oben beschriebenen Nachteilen betrieben wird. Die rasche säurekatalysierte Polymerisation führt zu hochvernetzten Polymeren mit hohem Verkokungsrückstand, die nach dem Entfernen des Lösungsmittels oft als braunschwarze Pulver oder spröde Feststoffe anfallen. Sie sind nicht schmelzbar und somit problemlos pyrolysierbar.

Das metall- und/oder metalloidhaltige polymere Produkt kann in einer ersten Wärmebehandlungsstufe im Vakuum oder einer inerten oder reduzierenden Atmosphäre, die aus $N_2$, $H_2$, CO oder Ar oder deren Mischungen besteht, bis zu einer Temperatur von 1000°C erhitzt werden. Die Zersetzung läuft im allgemeinen in mehreren Stufen ab, wobei ab 300°C der eigentliche Crackvorgang unter Gasentwicklung einsetzt. Vorher kann je nach den eingesetzten Ausgangsverbindungen HCl, $H_2O$ oder Alkohol entweichen. Im wesentlichen ist die Gasentwicklung bis zu einer Temperatur von 700°C abgeschlossen, vereinzelt sind jedoch höhere Temperaturen von bis zu 1000°C erforderlich.

Nach einer bevorzugten Ausführungsform des erfindungsgemäßen Verfahrens läßt sich der Halogenwasserstoff vollständig entfernen, wenn während der ersten Wärmebehandlungsstufe die Gasatmosphäre Wasserdampf mit einem Partialdruck von 10 bis 1000 mbar enthält. Um eine Reaktion des Wasserdampfes mit Kohlenstoff zu vermeiden, sollte bei Einleiten von Wasserdampf eine Temperatur von 850°C nicht überschritten werden. Die vollständige Entfernung von Halogen ist dann zweckmäßig, wenn eine Halogen- oder Halogenwasserstoffentwicklung während des nachfolgenden Hochtemperaturschritts vermieden werden soll. Die Halogenverbindungen würden wegen ihrer Korrosivität die Wahl des Ofen- und Tiegelmaterials während der Hochtemperaturbehandlung stark einschränken.

Die im ersten Pyrolyseschritt dargestellten Produkte sind schwarze, pulvrige bzw. körnige Feststoffe röntgenamorpher bis teilkristalliner Struktur und weisen hohe spezifische Oberflächen auf. Sie bestehen aus dem Metall- oder Metalloidelement, Sauerstoff, Kohlenstoff und besitzen bei Verzicht auf die oben beschriebene Behandlung mit Wasserdampf niedrige Gehalte an Halogen.

Zur Erzeugung des Carbids aus dem Metall oder Metalloid wird das thermisch vorbehandelte Produkt einer zweiten Wärmebehandlung bei einer Temperatur von 1000 bis 1800°C in einer inerten oder reduzierten Atmosphäre geglüht. Hierbei bieten sich Edelgase, Kohlenmonoxid, Wasserstoff oder deren Gemische an.

Das erfindungsgemäße Verfahren bietet den Vorteil, daß deutlich geringere Temperaturen, kürzere Kalzinierungszeiten und geringere Kohlenstoffmengen als beispielsweise beim carbothermischen Verfahren zur Anwendung kommen. Die Ursache muß in der nicht aufgeklärten Struktur der polymeren Vorprodukte liegen, die nach dem erfindungsgemäßen Verfahren entstehen.

Zur Erzeugung der Nitride oder Carbonitride aus dem Metall oder Metalloid wird das thermisch vorbehandelte Produkt einer zweiten Wärmebehandlung bei einer Temperatur von 1000 bis 1800°C in einer Gasatmosphäre aus Stickstoffgas oder Ammoniakgas oder Ammoniak/Stickstoffgasmischungen durchgeführt. Wie bei der Carbidbildung ist die Nitridierung im Vergleich zu anderen Verfahren bei niedrigeren Temperaturen und kürzeren Verweilzeiten zu realisieren. Die Sauerstoffgehalte der feinteiligen Nitrid- bzw. Carbonitridpulver sind zusätzlich in der Regel deutlich niedriger.

Das Produkt kann vor der zweiten Wärmebehandlung vorteilhaft verdichtet werden, um eine höhere Raum/Zeitausbeute und somit die Wirtschaftlichkeit des Verfahrens zu verbessern. Die Verdichtung läßt sich zum Beispiel im Walzenverdichter, Vakuumwalzenverdichter oder Kollergang erzielen.

Die aus den Metall- oder Metalloidverbindungen dargestellten Carbide, Nitride und Carbonitride können zur Entfernung des überschüssigen Restkohlenstoffs einer thermischen Nachbehandlung in einer sauerstoffhaltigen Atmosphäre bei Temperaturen bis 800°C unterzogen werden.

Das erfindungsgemäße Verfahren liefert feinteilige, sinteraktive Pulver mit hohen spezifischen Oberflächen. Die je nach Prozeßführung auftretenden lockeren Agglomerate lassen sich durch eine kurze Mahlung zerstören. Die entstandenen Pulver sind chemisch rein und weisen überraschenderweise trotz der Verwendung der Metall-oder Metalloidhalogenide nicht zu erwartende niedrige Halogengehalte auf, selbst dann, wenn nach der Polymerisation das Resthalogen nicht durch Behandlung mit Wasserdampf entfernt wird.

Die Erfindung wird im weiteren durch die nachfolgend aufgeführten Beispiele erläutert, ohne daß darin eine Einschränkung der Erfindung zu sehen ist.

Beispiel 1

Zu einer Suspension von 266,7 g Aluminiumchlorid in 800 ml Methylenchlorid wurde unter Rühren und Rückflußkühlung des verdampfenden Lösungsmittels eine Lösung von 130,0 g Furfurylalkohol in 700 ml Methylenchlorid innerhalb von 30 Minuten zugetropft. Nach Abdestillation des Methylenchlorids verblieben 372 g eines braun-schwarzen pulvrigen Feststoffes.

Dieses Pulver wurde in einer ersten Wärmebehandlung in Stickstoffatmosphäre innerhalb von sechs Stunden auf 600°C erhitzt und nach einer Haltezeit von sechs Stunden langsam abgekühlt.

Es verblieben 192 g eines schwarzen, feinteiligen, röntgenamorphen Pulvers mit folgender chemischer Zusammensetzung: Al = 26,9 %; O = 23 %; C = 36 %; Cl = 4 %; das entspricht einem Verhältnis Al : O : C von 1 : 1,45 : 3. Die spezifische Oberfläche beträgt 62 $m^2g^{-1}$.

15,79 g der Substanz aus der ersten Wärmebehandlung wurden in einem Graphittiegel unter Stickstoffatmosphäre fünf Stunden bei 1650°C erhitzt. Nach dem Abkühlen verblieben 9,04 g (= 57 %) als feinteiliger schwarzer Feststoff. Es handelte sich um kristallines AlN (Röntgenbeugungsanalyse) und röntgenamorphen Kohlenstoff. Die chemische Analyse ergab Gehalte von 28 % Kohlenstoff und 0,39 % Sauerstoff.

7, 93 g der Substanz aus der zweiten Wärmebehandlung wurden in einem Korundtiegel zur Abreicherung des überschüssigen kohlenstoffs fünf Stunden bei 700°C an Luft getempert.

Das feinteilige, hellgraue AlN-Pulver (5,70 g = 72 % Rückstand) konnte mit einem Gehalt von 0,18 % C, 0,90 % O und 0,005 % Cl dargestellt werden. Die spezifische Oberfläche wurde zu 3,1 $m^2g^{-1}$ bestimmt. Die Primärkorngröße, aus Raster-Elektronenmikroskop-(REM)-Aufnahmen ermittelt, war kleiner als 0,3 $\mu$m. Die Ausbeute an AlN, bezogen auf die eingesetzte Menge an AlCl$_3$, betrug 96 %.

Beispiel 2

Es wurden 3100 g AlCl$_3$ in 10 l Methylenchlorid und 1,5 l Aceton gelöst und entsprechend Beispiel 1 mit einer Lösung von 1250 g Furfurylalkohol in 5 l Methylenchlorid versetzt. Das Lösungsmittel wurde abdestilliert. Das pulvrige Reaktionsprodukt wurde anschließend in einer Stickstoffatmosphäre in einer Quarzbirne zwei Stunden bei 200°C zwei Stunden bei 400°C und sechs Stunden bei 900°C erhitzt. Es wurden 1950 g des pulvrigen teilkristallinen Feststoffs ($\alpha$-Al$_2$O$_3$) mit folgender chemischer Zusammensetzung erhalten: C = 44 %; O = 30 %; Cl = 0,20 %; BET = 468 $m^2g^{-1}$ (Ein-Punkt-Messung mit N$_2$).

Ein Teil des Pulvers (500 g) wurde in einer zweiten Wärmebehandlung bei 1550°C innerhalb von 10 Stunden in kristallines AlN überführt (340 g).

Die Kohlenstoffabreicherung des Pulvers (10,2 g) erfolgte gemäß Beispiel 1. Es resultierte AlN-Pulver (6,6 g) mit folgender chemischer Zusammensetzung: N = 33 %; C = 0,088 %; O = 0,93 %; Cl < 0,005 %; BET = 5,1 m²*g⁻¹; Primärkorngröße (aus REM-Aufnahmen) < 0,3 μm.

Beispiel 3

Eine Lösung von 95 g TiCl₄ in 1000 ml Methylenchlorid wurde gemäß Beispiel 1 innerhalb von 2,5 Stunden mit 44 g Furfurylalkohol in 700 ml Methylenchlorid versetzt. Die schwarze Lösung wurde eine Stunde nachgerührt und anschließend das Lösungsmittel abdestilliert.

Die erste Wärmebehandlung des braunschwarzen Pulvers erfolgte zehn Stunden bei 500°C unter Stickstoffatmosphäre, wonach 71 g eines röntgenamorphen Pulvers übrigblieben.

In einer zweiten Wärmbehandlung wurden 20 g dieses Pulvers unter Stickstoffatmosphäre 15 Stunden bei 1400°C zu Titannitrid (10 g Rückstand) umgesetzt. Es resultierte ein TiN-Pulver mit 23 % Kohlenstoff und 1,42 % Sauerstoff.

**Patentansprüche**

1. Verfahren zur Herstellung feinteiliger Carbide und/oder Nitride und/oder Carbonitride von Metallen und/oder Metalloiden der Elemente der III. und IV. Hauptgruppe sowie der III., IV., V. und VI. Nebengruppe des periodischen Systems der Elemente aus Verbindungen der Formeln $MX_m$ und/oder $R_nMX_{m-n}$, wobei X ein Halogen ist und R Wasserstoff, Alkyl oder Aryl ist und n ganzzahlige Werte zwischen eins und der um eins verringerten maximalen Wertigkeitsstufe m des Elements M annehmen kann, durch Umsetzung mit einer reaktiven kohlenwasserstoffhaltigen Verbindung und/oder einem reaktiven Gemisch kohlenwasserstoffhaltiger Verbindungen und thermischer Zersetzung des so erhaltenen Produktes zu den entsprechenden Carbiden, oder zu den entsprechenden Nitriden und/oder zu den entsprechenden Carbonitriden bei gleichzeitiger Nitridierung, dadurch gekennzeichnet, daß die reaktive, kohlenwasserstoffhaltige Verbindung polymerisierbar ist und nur eine C-OH-Gruppe enthält und/oder das Gemisch von kohlenwasserstoffhaltigen Verbindungen polymerisierbar ist und eine reaktive, nur eine C-OH-Gruppe enthaltende Verbindung beinhaltet.

2. Verfahren gemäß Anspruch 1, dadurch gekennzeichnet, daß das reaktive, polymerisierbare Gemisch von kohlenwasserstoffhaltigen Verbindungen eine C-OH-Gruppe enthaltende Verbindung oder Gemische davon und Formaldehyd ist.

3. Verfahren gemäß Anspruch 2, dadurch gekennzeichnet, daß die C-OH-Gruppe enthaltend Verbindung Phenol und/oder ein Phenolderivat ist.

4. Verfahren gemäß Anspruch 1, dadurch gekennzeichnet, daß die reaktive, polymerisierbare, kohlenwasserstoffhaltige Verbindung ein Alkohol, bevorzugt Furfurylalkohol und/oder dessen Derivate ist.

5. Verfahren gemäß Anspruch 1, dadurch gekennzeichnet, daß als Metall- und/oder Metalloidverbindung eine oder mehrere Verbindungen der Elemente Ti, Hf, Zr, V, Nb, Ta, Cr. Mo und/oder W eingesetzt werden.

6. Verfahren gemäß Anspruch 1, dadurch gekennzeichnet, daß als Metall- und/oder Metalloidverbindung eine oder mehrere Verbindungen der Elemente B, Al und/oder Si eingesetzt werden.

7. Verfahren gemäß Anspruch 4, dadurch gekennzeichnet, daß R methyl und/oder Phenyl bedeutet.

8. Verfahren gemäß einem oder mehrerer der Ansprüche 1 bis 7, dadurch gekennzeichnet, daß die Umsetzung der Verbindungen zu einem polymeren Produkt in einem Lösungsmittel durchgeführt wird.

9. Verfahren gemäß einem oder mehrerer der Ansprüche 1 bis 8, dadurch gekennzeichnet, daß die Umsetzung der Verbindungen zu einem polymeren Produkt mit Hilfe eines Polymerisationskatalysators durchgeführt wird.

10. Verfahren gemäß einem oder mehrerer der Ansprüche 1 bis 9, dadurch gekennzeichnet, daß das metall-und/oder metalloidhaltige polymere Produkt in einer ersten Wärmebehandlungsstufe im Vakuum oder einer inerten oder reduzierenden Atmosphäre bis zu einer Temperatur von 1000°C unterzogen wird.

11. Verfahren gemäß Anspruch 10, dadurch gekennzeichnet, daß während der ersten Wärmebehandlungsstufe zur vollständigen Entfernung des Halogenwasserstoffs die Atmosphäre Wasserdampf mit einem Partialdruck von 10 bis 1000 mbar enthält.

12. Verfahren gemäß einem der Ansprüche 10 oder 11, dadurch gekennzeichnet, daß das thermisch vorbehandelte Produkt zur Erzeugung des Carbids und/oder Nitrids und/oder Carbonitrids aus dem Metall und/oder Metalloid und/oder deren Mischungen einer zweiten Wärmebehandlung bei einer Temperatur von 1000 bis 1800°C in einer Inertgasatmosphäre oder reduzierenden Atmosphäre durchgeführt wird.

13. Verfahren gemäß einem oder mehrerer der Ansprüche 10 bis 12, dadurch gekennzeichnet, daß das Produkt vor der zweiten Wärmbehandlung verdichtet wird.

14. Verfahren gemäß einem oder mehrerer der Ansprüche 1 bis 13, dadurch gekennzeichnet, daß das so erhaltene Carbid, Nitrid und/oder Carbonitrid aus dem Metall und/oder Metalloid zur Entfernung des überschüssigen Kohlenstoffs einer thermischen Nachbehandlung in einer sauerstoffhaltigen Atmosphäre bei Temperaturen bis 800°C unterzogen wird.

**Claims**

1. A process for the preparation of finely divided carbides and/or nitrides and/or carbonitrides of metals and/or metalloids of Elements of the Main Groups III. and IV. and sub-Groups III., IV., V. and VI. of the Periodic System of Elements from compounds of the formula $MX_m$ and/or $R_nMX_{m-n}$, in which X is a halogen and R is hydrogen, alkyl or aryl and n stands for integers with values from one to one less than the maximum valency stage m of the Element M, by the reaction of a reactive compound containing hydrocarbon and/or a reactive mixture of compounds containing hydrocarbons and thermal decomposition of the resulting product to the corresponding carbides or to the corresponding nitrides and/or to the corresponding carbonitrides with concomitant nitridation, characterised in that the reactive compound containing hydrocarbons is polymerisable and contains only one C-OH group and/or the mixture of compounds containing hydrocarbons is polymerisable and contains a reactive compound having only one C-OH group.

2. A process according to Claim 1, characterised in that the reactive, polymerisable mixture of compounds containing hydrocarbons is a compound containing a C-OH group or mixtures thereof and formaldehyde.

3. A process according to Claim 2, characterised in that the compound containing a C-OH group is phenol and/or a phenol derivative.

4. A process according to Claim 1, characterised in that the reactive, polymerisable compound containing hydrocarbon is an alcohol, preferably furfuryl alcohol and/or derivatives thereof.

5. A process according to Claim 1, characterised in that the metal and/or metalloid compound used consists of one or more compounds of the Elements Ti, Hf, Zr, V, Nb, Ta, Cr, Mo and/or W.

6. A process according to Claim 1, characterised in that the metal and/or metalloid compound used consists of one or more compounds of the Elements B, Al and/or Si.

7. A process according to Claim 4, characterised in that R denotes methyl and/or phenyl.

8. A process according to one or more of Claims 1 to 7, characterised in that the reaction of the compounds to form a polymeric product is carried out in a solvent.

9. A process according to one or more of Claims 1 to 8, characterised in that the reaction of the compounds to form a polymeric product is carried out with the aid of a polymerisation catalyst.

10. A process according to one or more of Claims 1 to 9, characterised in that the polymeric product containing metal and/or metalloid is subjected in a first heat treatment stage under vacuum or in an inert or reducing atmosphere to a temperature of up to 1000°C.

11. A process according to Claim 10, characterised in that in the first heat treatment stage, the atmosphere contains steam under a partial pressure of from 10 to 1000 mbar for complete removal of the hydrogen halide.

12. A process according to one of the Claims 10 or 11, characterised in that the thermally pretreated product is subjected to a second heat treatment at a temperature of from 1000 to 1800°C in an inert gas atmosphere or a reducing atmosphere for producing the carbide and/or nitride and/or carbonitride from the metal and/or metalloid and/or mixtures thereof.

13. A process according to one or more of Claims 10 to 12, characterised in that the product is compacted before the second heat treatment.

14. A process according to one or more of Claims 1 to 13, characterized in that the carbide, nitride and/or carbonitride thus obtained from the metal and/or metalloid is subjected to a thermal aftertreatment at temperatures of up to 800°C in an oxygen-containing atmosphere for removing the excess carbon.

**Revendications**

1. Procédé de production de carbures et/ou de nitrures et/ou de carbonitrures, en fines particules, de métaux et/ou de métalloïdes des Eléments des troisième et quatrième groupes principaux ainsi que des troisième, quatrième, cinquième et sixième groupes secondaires du Tableau Périodique des Eléments à partir de composés de formules $MX_m$ et/ou $R_nMX_{m-n}$ où X désigne un halogène et R est l'hydrogène, un groupe alkyle ou aryle et n peut prendre des valeurs entières entre 1 et la valence maximale m de l'élément M diminuée d'une unité, par réaction avec un composé hydrocarboné réactif et/ou un mélange réactif de composés hydrocarbonés et décomposition thermique du produit ainsi obtenu en les carbures correspondants ou en les nitrures correspondants et/ou en les carbonitrures correspondants, accompagnée d'une nitruration, caractérisé en ce que le composé hydrocarboné réactif est polymérisable et contient un seul groupe C-OH, et/ou le mélange de composés hydrocarbonés est polymérisable et comprend un composé réactif contenant un seul groupe C-OH.

2. Procédé suivant la revendication 1, caractérisé en ce que le mélange réactif polymérisable de composés hydrocarbonés est un composé contenant un groupe C-OH ou des mélanges de ce composé et de formaldéhyde.

3. Procédé suivant la revendication 2, caractérisé en ce que le composé contenant un groupe C-OH est le phénol et/ou un dérivé de phénol.

4. Procédé suivant la revendication 1, caractérisé en ce que le composé hydrocarboné réactif polymérisable est un alcool, de préférence l'alcool furfurylique et/ou ses dérivés.

5. Procédé suivant la revendication 1, caractérisé en ce qu'on utilise comme composé de métal et/ou de métalloïde un ou plusieurs composés des éléments Ti, Hf, Zr, V, Nb, Ta, Cr, Mo et/ou W.

6. Procédé suivant la revendication 1, caractérisé en ce qu'on utilise comme composé de métal et/ou de métalloïde un ou plusieurs composés des Eléments B, Al et/ou Si.

7. Procédé suivant la revendication 4, caractérisé en ce que R désigne le groupe méthyle et/ou le groupe phényle.

8. Procédé suivant une ou plusieurs des revendications 1 à 7, caractérisé en ce que la réaction des composés pour former un produit polymérique est conduite dans un solvant.

9. Procédé suivant une ou plusieurs des revendications 1 à 8, caractérisé en ce que la réaction des composés pour former un produit polymérique est conduite à l'aide d'un catalyseur de polymérisation.

10. Procédé suivant une ou plusieurs des revendications 1 à 9, caractérisé en ce que le produit polymérique contenant un métal et/ou un métalloïde est soumis, dans une première étape de traitement thermique, au vide ou à une atmosphère inerte ou réductrice jusqu'à une température de 1000°C.

11. Procédé suivant la revendication 10, caractérisé en ce que l'atmosphère contient de la vapeur d'eau sous pression partielle de 10 à 1000 mbars pendant la première étape de traitement thermique jusqu'à l'élimination totale de l'halogénure d'hydrogène.

12. Procédé suivant l'une des revendications 10 ou 11, caractérisé en ce que le produit pré-traité thermiquement, pour la production du carbure et/ou du nitrure et/ou du carbonitrure à partir du métal et/ou du métalloïde et/ou de leurs mélanges, est exposé à un second traitement thermique à une température de 1000 à 1800°C dans une atmosphère de gaz inerte ou dans une atmosphère réductrice.

13. Procédé suivant une ou plusieurs des revendications 10 à 12, caractérisé en ce que le produit est comprimé avant le second traitement thermique.

14. Procédé suivant une ou plusieurs des revendications 1 à 13, caractérisé en ce que le carbure, le nitrure et/ou le carbonitrure ainsi obtenus à partir du métal et/ou du métalloïde sont soumis, afin d'éliminer le carbone en excès, à un post-traitement thermique dans une atmosphère contenant de l'oxygène à des températures allant jusqu'à 800°C.